# EUROPÄISCHE PATENTSCHRIFT

(11) **EP 1 960 560 B1**
(45) Veröffentlichungstag und Bekanntmachung des Hinweises auf die Patenterteilung: **12.04.2017**
(21) Anmeldenummer: 06829274.7
(22) Anmeldetag: 05.12.2006
(51) Int. Cl.: F16D 23/04, C23C 8/08, C23C 8/10, C22F 1/00, F16H 3/12, F16H 23/06, C22C 9/05, C22C 9/01, C22F 1/08, C22C 9/04, F16D 23/02

(54) **KUPFER-ZINK-LEGIERUNG SOWIE DARAUS HERGESTELLTER SYNCHRONRING**
COPPER-ZINC ALLOY AND SYNCHRONIZING RING PRODUCED THEREFROM
ALLIAGE DE CUIVRE ET DE ZINC ET BAGUES DE SYNCHRONISATION FABRIQUEES A PARTIR DE CET ALLIAGE

(30) Priorität: 13.12.2005 DE 102005059391
(43) Veröffentlichungstag der Anmeldung: 27.08.2008
(73) Patentinhaber: Diehl Metall Stiftung & Co. KG, 90552 Röthenbach (DE)
(72) Erfinder: GAAG, Norbert, 91207 Lauf (DE); HOLDERIED, Meinrad, 91338 Igensdorf (DE); GEBHARD, Friedrich, 91207 Lauf/Peg (DE)
(74) Vertreter: Diehl Patentabteilung
(86) Internationale Anmeldenummer: PCT/EP2006/011622
(87) Internationale Veröffentlichungsnummer: WO 2007/068368

(56) Entgegenhaltungen:
- EP-A1- 0 313 036
- DE-A1- 3 809 994
- GB-A- 2 049 727
- JP-A- 8 283 889
- US-A- 4 191 564
- US-A- 5 788 924

## Beschreibung

Die Erfindung betrifft eine Kupfer-Zink-Legierung, die im Wesentlichen bleifrei ist. Die Erfindung betrifft weiter eine Verwendung einer derartigen Kupfer-Zink-Legierung zur Herstellung eines Synchronrings sowie einen Synchronring.

Kupfer-Zink-Legierungen oder Messinge werden in der Sanitär-Industrie genauso eingesetzt wie in der Elektronikindustrie. In der Automobilindustrie werden Messinge mit hoher Verschleißbeständigkeit und einem hohen Reibbeiwert für Synchronringe verwendet, die in einem mechanischen Schaltgetriebe zur Synchronisation des Gangrades eingesetzt werden.

Um eine Kupfer-Zink-Legierung insbesondere mittels spanender Bearbeitung leicht verarbeiten zu können, muss eine gewisse Sprödigkeit des Werkstoffs eingestellt werden, um bei der Bearbeitung möglichst keine langen Späne entstehen zu lassen, die vom Werkstück und vom bearbeitenden Werkzeug nur unschwer abzutransportieren wären. Bekanntermaßen wird diese zur mechanischen Bearbeitung von Messingen gewünschte Sprödigkeit durch Hinzufügen eines gewissen Anteils an Blei erzielt. Nachteiligerweise stellt jedoch Blei bei entsprechenden Dosen eine Gefährdung für die menschliche Gesundheit dar.

Es ist daher wünschenswert, mechanisch bearbeitbare Kupfer-Zink-Legierungen anzugeben, die einen möglichst geringen oder gar keinen Blei-Gehalt aufweisen. Diverse Richtlinien der Europäischen Union gestatten zwar noch die Verwendung von Blei in Messinglegierungen, es ist aber abzusehen, dass der für in Kraftfahrzeugen eingesetzten Messingen zulässige Bleigehalt von bis zu 4% nach unten korrigiert wird.

Aus der EP 1 045 041 B1 ist eine bleifreie Kupfer-Zink-Legierung für Anwendungen in der Sanitär-Industrie bekannt. Die angegebene Legierung umfasst 69 bis 79 Gew.-% Kupfer, 2 bis 4 Gew.-% Silizium, 0,1 bis 1,5 Gew.-% Aluminium sowie 0,02 bis 0,25 Gew.-% Phosphor. Aus dem Zusammenspiel der Komponenten Silizium, Aluminium und Phosphor soll eine Gamma-Phase der Legierung folgern, wodurch ohne die Verwendung von Blei eine gute Maschinenverarbeitbarkeit gewährleistet ist.

Bleiarme Kupfer-Zink-Legierungen mit einem hohen Verschleißwiderstand zur Anwendung in einem Synchronring sind aus der DE 29 19 478 C2, der DE 37 35 783 C1 und der EP 0 657 555 B1 bekannt.

In der DE 29 19 478 C2 wird eine Kupfer-Zink-Legierung mit 70 bis 73 Gew.-% Kupfer, 6 bis 8 Gew.-% Mangan, 4 bis 6 Gew.-% Aluminium, 1 bis 4 Gew.-% Silizium, 1 bis 3 Gew.-% Eisen, 0,5 bis 1,5 Gew.-% Blei, 0 bis 0,2 Gew.-% Nickel, 0 bis 0,2 Gew.-% Zinn sowie Zink als Rest angegeben. Zum Erreichen des hohen Verschleißwiderstands weist diese Legierung ein Gefüge aus 60 bis 85% α-Mischkristall in überwiegend fein-disperser Verteilung in der β-Phase auf. Blei ist mit einem relativ geringen Gewichtsanteil zulegiert.

In der DE 37 35 783 C1 wird eine Kupfer-Zink-Legierung zur Verwendung insbesondere für Synchronringe vorgeschlagen, die aus 50 bis 65 Gew.-% Kupfer, 1 bis 6 Gew.-% Aluminium, 0,5 bis 5 Gew.-% Silizium, 5 bis 8 Gew.-% Nickel sowie wahlweise 0 bis 1 Gew.-% Eisen, 0 bis 2 Gew.-% Blei und Zink als Rest besteht. Ein Anteil von Blei von weniger als 2 Gew.-% ist optional. Die hohe Verschleißbeständigkeit wird dadurch erzielt, dass das Nickel überwiegend in intermetallischer Verbindung mit Silizium und Aluminium vorliegt.

Aus der EP 0 657 555 B1 ist ferner eine Kupfer-Zink-Legierung mit hoher Verschleißbeständigkeit bekannt, die 40 bis 65 Gew.-% Kupfer, 8 bis 25 Gew.-% Nickel, 2,5 bis 5 Gew.-% Silizium, 0 bis 3 Gew.-% Aluminium, 0 bis 3 Gew.-% Eisen, 0 bis 2 Gew.-% Mangan, 0 bis 2 Gew.-% Blei, Rest Zink sowie unvermeidbare Verunreinigungen aufweist. Die hohe Verschleißbeständigkeit wird durch den sehr hohen Gehalt an Nickel und Silizium erzielt, der dazu führt, dass in der Matrix Nickel-Silizide mit hohem Volumengehalt vorliegen. Das Gefüge weist keinerlei γ-Phase auf und besteht hauptsächlich aus β-Phasen. Blei in geringen Mengen wird im Hinblick auf eine gute Bearbeitbarkeit als nützlich erachtet.

Ferner ist der DE 28 30 459 C3 eine Kupfer-Nickel-Legierung mit hoher Verschleißbeständigkeit entnehmbar, die aus 45 bis 75 Gew.-% Kupfer, 2 bis 7 Gew.-% Aluminium, 0,1 bis 2 Gew.-% Eisen, 1 bis 5 Gew.-% Nickel, 0,5 bis 2 Gew.-% Silizium, 0,1 bis 2 Gew.-% Kobalt und einem Rest aus Zink besteht. Für die hohe Verschleißbeständigkeit enthält diese Legierung weiter eine intermetallische Verbindung vom Nickel-Silizium-Typ, in die auch Aluminium und Kobalt eingebunden ist. Blei ist nicht enthalten.

Schließlich wird in der DE 38 09 994 C3 für einen Synchronring eine Kupfer-Zink-Legierung aus 20 bis 40 Gew.-% Zink, 2 bis 8 Gew.-% Aluminium, aus mindestens zwei weiteren Komponenten, die intermetallische Verbindungen bilden, wobei mindestens eine der Komponenten Titan ist, und zum restlichen Anteil aus Kupfer und zufälligen Verunreinigungen, angegeben. Die hohe Verschleißbeständigkeit wird durch die intermetallischen Verbindungen erzielt. Blei ist nicht notwendig.

Den bleiarmen und bleilosen Kupfer-Zink-Legierungen, die einen hohen Verschleißwiderstand aufweisen, ist gemein, dass sie einen hohen Gehalt an intermetallischen Phasen aufweisen. Diese intermetallischen Phasen führen zu einer gewissen Sprödigkeit der Legierung, so dass diese auch leichter maschinenbearbeitbar wird. Die Späne brechen leicht und können abtransportiert werden. Aus diesem Grund kann der Blei-Anteil reduziert bzw. auf Blei verzichtet werden. Wird wie in der EP 1 045 041 B1 keine hohe Verschleißbeständigkeit gefordert, so kann der Bleigehalt reduziert werden, indem aus einem Zusammenspiel von Silizium, Aluminium und Phosphor eine γ-Phase in der Legierung stabilisiert wird. Phosphor ist in dieser Legierung enthalten, um eine Entzinkungsbeständigkeit der Legierung für die gewünschte Anwendung in der Sanitär-Industrie zu gewährleisten.

Aus EP 0 313 036 A1 ist die Verwendung einer Kupfer-Zink-Legierung für Halbzeuge und Halbfabrikate bekannt. Die Legierung weist eine Zusammensetzung von 55 bis 60 % Cu, 3 bis 5 % Al, 1 bis 3 % Si, 6 bis 7 % Ni, 0 bis 1 % Fe, 0 bis 1 % Pb, Rest Zn auf.

Aufgabe der Erfindung ist es, eine möglichst verschleißbeständige Kupfer-Zink-Legierung anzugeben, die sich insbesondere zur Verwendung in einem Synchronring eignet und die im Wesentlichen bleifrei ist.

Diese Aufgabe wird erfindungsgemäß durch eine Kupfer-Zink-Legierung gelöst, die 55 bis 75 Gew.-% Kupfer, 0,1 bis 8 Gew.-% Aluminium, 0,3 bis 3,5 Gew.-% Eisen, 0,5 bis 8 Gew.-% Mangan, 0 bis weniger als 5 Gew.-% Nickel, 0 bis weniger als 0,1 Gew.-% Blei, 0 bis 3 Gew.-% Zinn, 0,3 bis 5 Gew.-% Silizium, weniger als 0,1 Gew.-% Kobalt, weniger als 0,05 Gew.-% Titan, 0 bis weniger als 0,02 Gew.-% Phosphor, unvermeidbare Verunreinigungen sowie einen Rest Zink umfasst.

Die Erfindung geht dabei von der Überlegung, aus, den Bleigehalt bewusst auf weniger als 0,1 Gew.-% abzusenken ohne hinsichtlich der gewünschten mechanischen Verarbeitbarkeit einen Ausgleich durch intermetallische Phasen oder Stabilisierung einer γ-Phase herzustellen. Eine ausreichende Verschleißbeständigkeit wird durch die notwendigen Legierungskomponenten Aluminium, Mangan, Eisen und Silizium gewährleistet. Mangan, Eisen und Silizium in den angegebenen Mengenbereichen führen in der Kupfer-Zink-Legierung zu einem genügenden Grundanteil an intermetallischen Phasen. Aluminium härtet insbesondere den Mischkristall. Mangan trägt zur Verschleißbeständigkeit positiv bei. Eine Verbesserung lässt sich durch die optional ausgeführten weiteren Legierungskomponenten Nickel und Zinn erzielen. Kobalt und Titan sind bis unterhalb der angegebenen Grenzen enthalten. Ein Zulegierung darüber hinaus ist jedoch für die gewünschte mechanische Verarbeitbarkeit und zur Einstellung der gewünschten Verschleißbeständigkeit nicht erforderlich. Phosphor ist als Legierungskomponente zur Verbesserung einer Entzinkungsbeständigkeit nicht nötig.

Das Absenken des Blei-Gehaltes auf weniger als 0,1 Gew.-% ohne eine Anhebung des Anteils an intermetallischen Phasen ist entgegen dem bisherigen Urteil der Fachwelt überraschend möglich, da sich nach umfangreichen Untersuchungen herausgestellt hat, dass auch ohne Zusatz an Blei eine spanende Bearbeitung der beanspruchten Kupfer-Zink-Legierung insbesondere zur Herstellung eines Synchronrings möglich ist.

Die Verschleißbeständigkeit und die Abriebfestigkeit der Kupfer-Zink-Legierung lässt sich verbessern, wenn in der Kupfer-Zink-Legierung vorteilhafterweise Aluminium mit einem Anteil von 0,5 bis 2,5 Gew.-%, Eisen mit einem Anteil von 0,3 bis 1 Gew.-%, Mangan mit einem Anteil von 0,5 bis 5 Gew.-%, Nickel mit einem Anteil von 0,5 bis weniger als 5 Gew.-%, Zinn mit einem Anteil von 0 bis 1,5 Gew.-% und Silizium mit einem Anteil von 0,3 bis 2 Gew.-% umfasst sind.

In einer alternativen vorteilhaften Ausgestaltung der Erfindung umfasst die Kupfer-Zink-Legierung einen höheren Aluminium-Anteil und zeichnet sich dadurch aus, dass Aluminium mit einem Anteil von 3 bis 8 Gew.-%, Eisen mit einem Anteil von 1 bis 3 Gew.-%, Mangan mit einem Anteil von 5 bis 8 Gew.-%, Nickel mit einem Anteil von 0 bis weniger als 0,5 Gew.-%, Zinn mit einem Anteil von 0 bis weniger als 0,5 Gew.-% und Silizium mit einem Anteil von 1 bis 4 Gew.-% umfasst sind. Ein derartiger Werkstoff weist die für einen Synchronring notwendigen mechanischen Eigenschaften auf.

Die Kupfer-Zink-Legierung eignet sich zur Herstellung eines Synchronrings, insbesondere unter Verwendung einer spanenden Bearbeitung.

Ausführungsbeispiele der Erfindung werden anhand einer Zeichnung und der nachfolgenden Beispiele näher erläutert. Dabei zeigt:

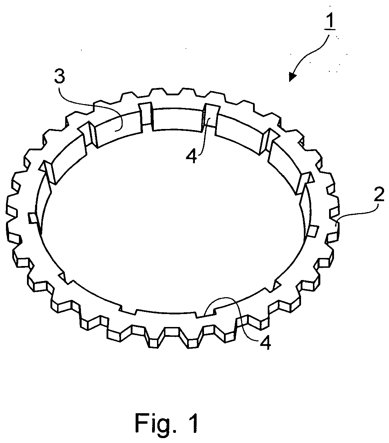

Fig. 1 in einer perspektivischen Darstellung einen Synchronring.

In Fig. 1 ist ein typischer Synchronring 1 dargestellt, wie er insbesondere durch spanende Bearbeitung aus einer Kupfer-Zink-Legierung hergestellt werden kann. Der Synchronring 1 weist eine innere Oberfläche 3 auf, die zur Reibpaarung mit einem konischen Reibpartner vorgesehen ist. Am Außenumfang des Synchronrings 1 sind Zähne 2 angeordnet, die in Eingriff mit entsprechenden Nuten an einer passenden Nutenhülse kommen. Zur Verbesserung der Ölabfuhr weist die innere Oberfläche 3 in axialer Richtung eingebrachte Ölnuten 4 auf, die im Falle einer Reibpaarung das anwesende Öl rasch abtransportieren.

### Beispiele:

Insgesamt werden vier Legierungen untersucht, wobei sich jeweils zwei Legierungen lediglich in ihrem Blei-Anteil unterscheiden. Die Legierung 1A bestehend aus 57,9 Gew.-% Kupfer, 1,65 Gew.-% Aluminium, 0,4 Gew.-% Eisen, 1,95 Gew.-% Mangan, 0,55 Gew.-% Blei, 0,6 Gew.-% Silizium und Rest Zink. Von dieser Legierung 1A unterscheidet sich die Legierung 1B dadurch, dass ihr Blei fehlt bzw. mit einem unvermeidbaren Verunreinigungsanteil von 0,02 Gew.-% enthalten ist. Legierung 2A umfasst 69,7 Gew.-% Kupfer, 5,2 Gew.-% Aluminium, 1,1 Gew.-% Eisen, 7,8 Gew.-% Mangan, 0,8 Gew.-% Blei, 1,8 Gew.-% Silizium sowie einen Rest Zink und unvermeidbare Verunreinigungen. Legierung 2B unterscheidet sich von Legierung 2A dadurch, dass Blei mit einem unvermeidbaren Anteil von 0,05 Gew.-% enthalten ist. Legierungen A sind bleihaltige Vergleichslegierungen, die sich hinsichtlich ihrer Verschleißbeständigkeit und Verarbeitbarkeit für Synchronringe eignen. Legierungen B sind Ausführungsformen der Erfindung.

### Beispiel 1:

In einer Reichert-Verschleißwaage werden mit einer Gleitgeschwindigkeit von 1,65 m/sec und einer Belastung von 52 N/mm² nach einer insgesamt gelaufenen Strecke von 2.500 m für die genannten Legierungen der Verschleißwiderstand in km/g und der Reibkoeffizient bestimmt. Hierzu wird ein Messingstift aus der jeweiligen Versuchslegierung mit einem Durchmesser von 2,7 mm mit der angegebenen Belastung auf einen umlaufenden Stahlring gedrückt. Der Verschleißwiderstand und der Reibkoeffizient wird aus dem Gewichtsverlust des Messingstifts nach der angegebenen Laufstrecke ermittelt. Das Ergebnis ist in folgender Tabelle zusammengefasst:

| **Legierung, Nummer** | **Verschleißwiderstand, km/g** | **Reibkoeffizient** |
|---|---|---|
| 1A | 201 | 0,12 |
| 1B | 235 | 0,12 |
| | | |
| 2A | 1215 | 0,11 |
| 2B | 1458 | 0,11 |

Es wird ersichtlich, dass der Verschleißwiderstand und der Reibkoeffizient der bleifreien Legierungen B gegenüber den bleihaltigen Legierungen A nicht verschlechtert ist, sondern sich im Gegenteil erhöht hat.

### Beispiel 2:

Es werden mit den genannten Legierungen Zerspanungsversuche durchgeführt. Hierzu wird in Synchronringen gemäß Figur 1, die aus den Versuchslegierungen hergestellt sind, ein Gewinde mit einer Gewindetiefe von 0,37 mm, einer Steigung von 0,65 mm und einem Flankenwinkel von 60° eingeschnitten. Der Gewindegang wird insgesamt fünf mal durchlaufen; d.h. es finden fünf Strehlgänge statt. Als Gewindeschneidwerkstoff wird ein Hartmetallwerkstoff der Güte K20 gemäß DIN 4990 verwendet. Nach einer definierten Anzahl von mit dem Schneidwerkzeug geschnittenen Gewindegängen wird der Werkzeugverschleiß gemessen. Hierzu wird die Differenz der Querschnittsfläche des Gewindeganges vor und nach Durchführung des Versuches bestimmt. Es ergibt sich folgendes Resultat:

| **Legierung, Nummer** | **Anzahl der geschnittenen Gewindegänge** | **Werkzeugverschleiß in mm²** |
|---|---|---|
| 1A | 6846 | 0,0226 |
| 1B | 14670 | 0,0085 |
| | | |
| 2A | 10273 | 0,0015 |
| 2B | 10273 | 0,0005 |

Für die Legierung 1A wurde nach 6.846 Gewindegängen der Versuch eingestellt, da sich hier bereits ein deutlicher Werkzeugverschleiß eingestellt hatte. Es ist festzuhalten, dass der Werkzeugverschleiß bei den bleifreien Legierungen B geringer ausfällt als bei den bleihaltigen Legierungen A.

### Beispiel 3:

Bei den gemäß Beispiel 2 durchgeführten Zerspanungsversuchen wurden die abgeführten Späne beobachtet. Dabei wurde festgestellt, dass die Späne der bleifreien Legierungen B gegenüber den bleihaltigen Legierungen A zwar länger, nicht aber einhakend und miteinander verwirrend ausgebildet sind. Wider Erwarten konnten die Späne beim spanenden Bearbeiten problemlos abtransportiert werden.

Die bleifreien Legierungen eignen sich insbesondere zur Herstellung eines Synchronrings. Das Zufügen von Blei zur Verbesserung der mechanischen Bearbeitbarkeit kann demnach entfallen.

### Bezugszeichenliste

- 1: Synchronring
- 2: Zähne
- 3: innere Oberfläche
- 4: Ölnuten

## Patentansprüche

1. Kupfer-Zink-Legierung, bestehend aus 55 bis 75 Gew.-% Kupfer, 0,1 bis 8 Gew.-% Aluminium, 0,3 bis 3,5 Gew.-% Eisen, 0,5 bis 8 Gew.-% Mangan, 0 bis weniger als 5 Gew.-% Nickel, 0 bis weniger als 0,1 Gew.-% Blei, 0 bis 3 Gew.-% Zinn, 0,3 bis 5 Gew.-% Silizium, weniger als 0,1 Gew.-% Kobalt, weniger als 0,05 Gew.-% Titan, wobei Kobalt und Titan bis unterhalb der angegebenen Grenzen enthalten sind, 0 bis weniger als 0,02 Gew.-% Phosphor, unvermeidbare Verunreinigungen sowie einen Rest Zink.

2. Kupfer-Zink-Legierung nach Anspruch 1,
**dadurch gekennzeichnet, dass**
Aluminium mit einem Anteil von 0,5 bis 2,5 Gew.-%, Eisen mit einem Anteil von 0.3 bis 1 Gew.-%, Mangan mit einem Anteil von 0,5 bis 5 Gew.-%, Nickel mit einem Anteil von 0,5 bis weniger als 5 Gew.-%, Zinn mit einem Anteil von 0 bis 1,5 Gew.-% und Silizium mit einem Anteil von 0,3 bis 2 Gew.-% umfasst sind.

3. Kupfer-Zink-Legierung nach Anspruch 1,
**dadurch gekennzeichnet, dass**
Aluminium mit einem Anteil von 3 bis 8 Gew.-%, Eisen mit einem Anteil von 1 bis 3 Gew.-%, Mangan mit einem Anteil von 5 bis 8 Gew.-%, Nickel mit einem Anteil von 0 bis weniger als 0,5 Gew.-%, Zinn mit einem Anteil von 0 bis weniger als 0,5 Gew.-% und Silizium mit einem Anteil von 1 bis 4 Gew.-% umfasst sind.

4. Verwendung einer Kupfer-Zink-Legierung nach einem der Ansprüche 1 bis 3 zur Herstellung eines Synchronrings (1).

5. Verwendung nach Anspruch 4,
**dadurch gekennzeichnet, dass**
der Synchronring (1) aus der Kupfer-Zink-Legierung unter Anwendung einer spanenden Bearbeitung hergestellt wird.

6. Synchronring (1) aus einer Kupfer-Zink-Legierung gemäß einem der Ansprüche 1 bis 3.

## Claims

1. Copper-zinc alloy, consisting of 55 to 75 wt.% copper, 0.1 to 8 wt.% aluminium, 0.3 to 3.5 wt.% iron, 0.5 to 8 wt. % manganese, 0 to less than 5 wt. % nickel, 0 to less than 0.1 wt.% lead, 0 to 3 wt.% tin, 0.3 to 5 wt.% silicon, less than 0.1 wt.% cobalt, less than 0.05 wt.% titanium, wherein it contains cobalt and titanium up to below the specified limits, 0 to less than 0.02 wt.% phosphorus, unavoidable impurities and the remainder zinc.

2. Copper-zinc alloy according to Claim 1, **characterized in that** it comprises aluminium in a proportion of from 0.5 to 2.5 wt.%, iron in a proportion of from 0.3 to 1 wt.%, manganese in a proportion of from 0.5 to 5 wt.%, nickel in a proportion of from 0.5 to less than 5 wt.%, tin in a proportion of from 0 to 1.5 wt.% and silicon in a proportion of from 0.3 to 2 wt.%.

3. Copper-zinc alloy according to Claim 1, **characterized in that** it comprises aluminium in a proportion of from 3 to 8 wt.%, iron in a proportion of from 1 to 3 wt.%, manganese in a proportion of from 5 to 8 wt.%, nickel in a proportion of from 0 to less than 0.5 wt.%, tin in a proportion of from 0 to less than 0.5 wt.% and silicon in a proportion of from 1 to 4 wt.%.

4. Use of a copper-zinc alloy according to one of Claims 1 to 3 for producing a synchronizer ring (1).

5. Use according to Claim 4, **characterized in that** the synchronizer ring (1) is produced from the copper-zinc alloy by machining.

6. Synchronizer ring (1) made of a copper-zinc alloy according to one of Claims 1 to 3.

## Revendications

1. Alliage de cuivre-zinc, constitué par : 55 à 75 % en poids de cuivre, 0,1 à 8 % en poids d'aluminium, 0,3 à 3,5 % en poids de fer, 0,5 à 8 % en poids de manganèse, 0 à moins de 5 % en poids de nickel, 0 à moins de 0,1 % en poids de plomb, 0 à 3 % en poids d'étain, 0,3 à 5 % en poids de silicium, moins de 0,1 % en poids de cobalt, moins de 0,05 % en poids de titane, le cobalt et le titane étant contenus jusqu'à moins que les limites indiquées, 0 à moins de 0, 02 % en poids de phosphore, des impuretés inévitables, le reste étant du zinc.

2. Alliage de cuivre-zinc selon la revendication 1, **caractérisé en ce que** l'aluminium est compris en une proportion de 0,5 à 2,5 % en poids, le fer en une proportion de 0,3 à 1 % en poids, le manganèse en une proportion de 0,5 à 5 % en poids, le nickel en une proportion de 0, 5 à moins de 5 % en poids, l'étain en une proportion de 0 à 1,5 % en poids et le silicium en une proportion de 0,3 à 2 % en poids.

3. Alliage de cuivre-zinc selon la revendication 1, **caractérisé en ce que** l'aluminium est compris en une proportion de 3 à 8 % en poids, le fer en une proportion de 1 à 3 % en poids, le manganèse en une proportion de 5 à 8 % en poids, le nickel en une proportion de 0 à moins de 0,5 % en poids, l'étain en une proportion de 0 à moins de 0,5 % en poids et le silicium en une proportion de 1 à 4 % en poids.

4. Utilisation d'un alliage de cuivre-zinc selon l'une quelconque des revendications 1 à 3 pour la fabrication d'une bague de synchroniseur (1).

5. Utilisation selon la revendication 4, **caractérisée en ce que** la bague de synchroniseur (1) est fabriquée à partir de l'alliage de cuivre-zinc par application d'un usinage.

6. Bague de synchroniseur (1) en un alliage de cuivre-zinc selon l'une quelconque des revendications 1 à 3.
